# FASCICULE DE BREVET EUROPEEN

(11) **EP 3 418 753 B1**
(45) Date de publication et mention de la délivrance du brevet: **26.01.2022**
(21) Numéro de dépôt: 18177655.0
(22) Date de dépôt: 14.06.2018
(51) Int. Cl.: G01P 3/489, G01P 3/488

(54) **PROCÉDÉ DE TRAITEMENT D'UN SIGNAL DE VITESSE DE ROTATION D'UN ARBRE DE MOTEUR D'AÉRONEF AFFECTÉ PAR DU BRUIT**
VERARBEITUNGSVERFAHREN EINES DURCH RAUSCHEN GESTÖRTEN SIGNALS DER MOTORWELLEN-DREHGESCHWINDIGKEIT EINES LUFTFAHRZEUGS
METHOD FOR PROCESSING A ROTATIONAL SPEED SIGNAL OF AN AIRCRAFT ENGINE SHAFT AFFECTED BY NOISE

(30) Priorité: 14.06.2017 FR 1755340
(43) Date de publication de la demande: 26.12.2018
(73) Titulaire: SAFRAN AIRCRAFT ENGINES, 75015 Paris (FR)
(72) Inventeur: DJELASSI, Cedrik, 77550 MOISSY-CRAMAYEL CEDEX (FR)
(74) Mandataire: Regimbeau

(56) Documents cités:
- EP-A2- 0 392 182
- JP-A- S59 180 463
- JP-A- S60 225 066
- JP-A- S60 225 067
- US-A1- 2007 108 969
- US-A1- 2008 197 917

## Description

### DOMAINE TECHNIQUE DE L'INVENTION

La présente invention concerne la mesure du régime d'éléments tournants d'un moteur d'aéronef, malgré l'existence de signaux de bruit parasites, produits par l'activité du moteur.

### ETAT DE LA TECHNIQUE ANTERIEUR

Pour les moteurs d'aéronefs, il est important de disposer de mesures précises de la vitesse de rotation de l'arbre du moteur. Cette information peut, par exemple, commander la coupure ou la régulation de l'alimentation du moteur, si la vitesse de rotation ou l'accélération dépassent une valeur prédéterminée.

Il est bien connu de mesurer la vitesse de rotation d'un arbre à l'aide d'un capteur de type électromagnétique associé à une roue phonique. On parlera ci-après de capteur à roue phonique, ou encore, de capteur à reluctance variable. La roue phonique étant entraînée par l'arbre, le mouvement rotatif de la roue phonique est fonction du mouvement rotatif de l'arbre. Le capteur crée, à l'aide d'un bobinage, un champ magnétique qui se referme soit dans l'air à l'espace entre deux dents de la roue phonique, soit sur une dent de la roue phonique. Une force électromotrice est ainsi générée aux bornes du bobinage, proportionnelle à la vitesse de rotation de la roue phonique. La fréquence de la tension alternative ainsi générée est égale à la fréquence de passage des dents de la roue phonique, elle-même illustrative de la vitesse de rotation de l'arbre, et l'amplitude de cette tension alternative est fonction de l'entrefer et de la fréquence du signal. La Déposante a décrit, dans la demande de brevet français publiée sous le numéro WO 2014/207369**,** un écrou denté pouvant être vissé autour d'un arbre de corps basse pression de turbomoteur d'aéronef, solidarisant par exemple l'arbre avec un roulement à bille. Les dents de cet écrou peuvent coopérer avec un capteur de vitesse de rotation fonctionnant par ce principe, pour fournir une mesure d'un régime d'élément tournant du moteur. Au moins une partie des dents de cet écrou comportent en outre des évidements, préservant la fonction de serrage de l'écrou tout en fournissant un plus grand nombre d'intervalles de déficit dans la pièce pour permettre une mesure précise de vitesse de rotation de l'arbre.

Des systèmes de mesure de vitesse de rotation à roue phonique peuvent notamment être utilisés pour mesurer le régime N1 de rotation du corps basse pression d'un turboréacteur à double corps. Sur des moteurs « direct drive » (entraînement direct de la soufflante par l'arbre basse pression), ce régime N1 est aussi le régime de la soufflante. Un capteur à roue phonique peut également permettre de mesurer le régime N2 de rotation du corps haute pression du turboréacteur double corps, ou la vitesse de rotation d'un autre élément tournant du moteur.

Un principe de mesure de fréquence à partir d'un signal sinusoïdal de détection de vitesse de rotation d'arbre, produit par un capteur à roue phonique (aussi dit capteur à reluctance variable) du type exposé ci-avant, est classiquement le suivant. Le signal de sortie sinusoïdal du capteur peut être filtré une première fois par un filtre RC, puis écrêté, puis filtré une deuxième fois, et enfin transformé en signal créneau par un comparateur à hystérésis (également appelé « »trigger de Schmidt» ») présentant un seuil de descente (ou redémarrage) à 0 et un seuil de montée (ou réarmement) à une valeur de tension prédéterminée. Le « »trigger de Schmidt» » donne en sortie un signal créneau qui commute vers une valeur haute lorsque la tension d'entrée dépasse le seuil de montée, et qui commute vers une valeur basse lorsque la tension d'entrée passe sous le seuil de descente.

Un calculateur moteur peut ensuite réaliser une mesure de fréquence sur le signal créneau obtenu.

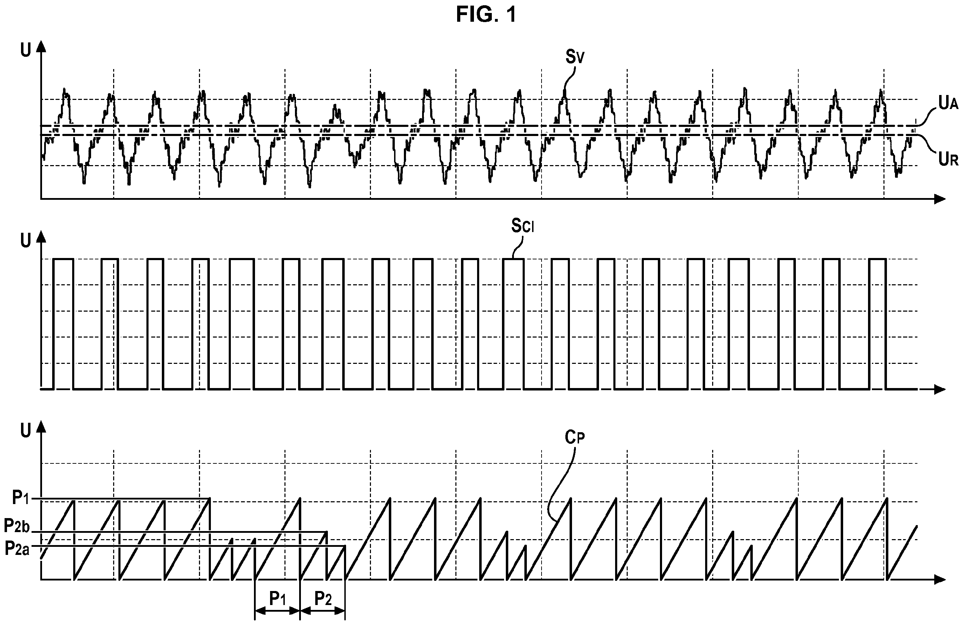

Or, le signal sinusoïdal permettant la mesure du régime N1, produit par un capteur à roue phonique, peut être fortement bruité. Des parties du capteur peuvent subir des perturbations électromagnétiques, dues à des vibrations mécaniques de certaines parties de moteur. On peut observer des événements ponctuels de bruit, mais également des signaux de bruit du type alternatif se superposant au signal représentatif de la rotation de la roue phonique (signal utile). La **figure 1** comporte un premier axe des abscisses illustrant la tension Sv aux bornes du capteur à roue phonique au cours du temps, dans le cas d'un signal altéré par un bruit parasite de type alternatif de fréquence supérieure à celle du signal utile, et un deuxième axe représentant en fonction du temps le signal créneau obtenu S_{CI} (sans post-traitement) après crénelage du signal de tension du graphique haut. L'amplitude pic à pic du bruit pouvant être localement supérieure à la différence de tension entre le seuil de redémarrage U_{R} et le seuil de réarmement U_{A}, le bruit provoque des commutations parasites du signal créneau. Un troisième axe illustre les variations d'un signal C_{P} de comptage des périodes successives du signal créneau S_{CI} au fil du temps. La temporisation illustrée par la courbe de ce troisième axe est relancée ici à chaque commutation descendante du signal créneau, du niveau haut vers le niveau bas. Par exemple, au cours de la période P₁ illustrée sur la figure, il ne se produit pas de commutation parasite due au bruit. En revanche, sur la période suivante P₂, le signal Sv détecté franchit le seuil de réarmement U_{A}, puis redescend en-deçà du seuil de redémarrage U_{R}, du fait du bruit alternatif parasite superposé au signal utile. La durée écoulée entre ces deux passages de seuils est bien inférieure à la période P₁, ce qui provoque des commutations rapides successives du signal créneau S_{C} obtenu, et la détection, en lieu et place d'une unique période théorique P₂ du signal créneau qui aurait été obtenue sans commutation parasite, de deux périodes successives P₂ₐ et P_{2b} pour le signal créneau S_{CI}. La mesure de vitesse de rotation de l'arbre est alors perturbée.

Plusieurs solutions ont déjà été envisagées pour pallier ce problème et fournir une mesure de régime d'arbre moins perturbée.

Une solution commune est l'application d'un filtrage passe-bas directement sur le signal avant crénelage, avec une fréquence de coupure choisie de manière à éliminer directement les bruits alternatifs à haute fréquence. Or, l'élimination d'un bruit de fréquence proche de la fréquence du signal utile provoque un déphasage du signal utile. Ce déphasage est problématique pour certaines utilisations possibles du signal de mesure de régime : notamment, le signal produit par la roue phonique peut être utilisé pour la fonction d'équilibrage moteur, si la roue phonique est configurée pour fournir un « top par tour » permettant de caler les éléments du moteur sur la rotation de l'arbre.

Par ailleurs, le filtrage passe-bas peut diminuer l'amplitude mesurée du signal utile, et augmenter le seuil d'accrochage de la mesure (seuil en-deçà duquel le régime de rotation n'est plus correctement mesurable). Cet effet est d'autant plus gênant que le rapport entre l'amplitude pic à pic du bruit de mesure et l'amplitude pic à pic du signal utile est élevé. Ce rapport peut notamment être élevé lorsque le régime mesuré est bas, par exemple durant une phase d'allumage du moteur.

Une autre solution de l'état de l'art consiste à augmenter la différence entre le seuil de redémarrage et le seuil de réarmement du « trigger » pour produire le signal créneau. Ainsi, à amplitude égale du bruit alternatif parasite, ce bruit provoque moins de commutations parasites du signal créneau. On connaît également une solution consistant à adapter l'amplitude du signal avant le crénelage, pour faire diminuer l'amplitude pic à pic du bruit par rapport à la différence entre les seuils. Mais là encore, le seuil d'accrochage de la mesure est augmenté, et la précision de la mesure de période du passage des dents est affectée, d'autant plus que le rapport de l'amplitude du bruit de mesure sur l'amplitude du signal utile est bas.

Il existe donc un besoin pour effectuer le crénelage, en entrée de calculateur moteur, du signal mesuré aux bornes du capteur à roue phonique, propre à empêcher des commutations indésirables dues à des bruits parasites de type sinusoïdal à haute fréquence, mais sans diminuer la précision ou la sensibilité de la mesure de régime.

### PRESENTATION GENERALE DE L'INVENTION

L'invention propose une solution pour ne pas tenir compte de commutations parasites dues à du bruit de mesure, sans pour autant modifier ni le signal auquel on applique le crénelage, ni les seuils de redémarrage et de réarmement du «trigger de Schmidt».

Un principe de la présente invention est de bloquer les commutations du signal créneau pendant une certaine durée après chaque commutation, par un traitement réalisé en aval du crénelage, et en amont de la mesure du régime par le calculateur moteur. Lorsque le signal mesuré dépasse un seuil de réarmement, ou passe en-deçà d'un seuil de redémarrage, et que le signal créneau est commuté, ledit signal créneau est « bloqué » pour une durée de maintien de commutation pendant laquelle il est estimé que, même si le gradient de vitesse de rotation des dents de la roue phonique est à son maximum, cette vitesse ne peut atteindre une valeur suffisante pour justifier une nouvelle commutation. Cela revient à supposer que toute nouvelle commutation obtenue après une première commutation, dans une durée inférieure à la durée de maintien de commutation précédemment calculée sur la base d'une loi prédictive du gradient de régime, ne peut résulter que du bruit parasite et ne doit pas être prise en compte.

Ainsi, l'invention concerne selon un premier aspect un procédé de traitement d'un signal alternatif de détection de vitesse de rotation d'un arbre d'un moteur d'aéronef, produit par un capteur à reluctance variable et affecté de bruits parasites de mesure, à partir d'un signal créneau brut commutant vers un niveau bas de tension, respectivement vers un niveau haut de tension, en correspondance avec le passage de la tension du signal alternatif en-dessous d'un seuil de redémarrage, respectivement au-dessus d'un seuil de réarmement, le procédé comprenant les étapes suivantes :
- calcul d'un signal créneau traité, à partir du signal créneau brut, et à l'aide d'une valeur de durée de maintien de commutation en-deçà de laquelle il est estimé qu'une partie non bruitée du signal alternatif ne donne pas lieu à une commutation, ladite durée de maintien de commutation étant calculée en fonction d'une valeur de vitesse de rotation de l'arbre obtenue antérieurement,
- mesure de la vitesse de rotation de l'arbre, par mesure de fréquence du signal créneau traité,

le procédé étant caractérisé en ce que chaque commutation vers le niveau bas ou vers le niveau haut du signal créneau traité déclenche le figeage du signal créneau traité pendant une durée exactement égale à la durée de maintien de commutation précédemment calculée, de sorte que les commutations du signal créneau non traité ne se traduisent pas par des commutations du signal créneau traité pendant ledit figeage,
le signal créneau traité n'étant plus figé une fois la durée de maintien de commutation écoulée.

De manière avantageuse, mais non limitative :
• la valeur de durée de maintien de commutation correspond au quart d'une période minimale de rotation de l'arbre à l'instant de mesure, ladite période minimale étant calculée à l'aide d'une loi de gradient maximal de la vitesse de rotation de l'arbre.
• le gradient maximal de vitesse de rotation de l'arbre pour une période donnée est fonction d'une valeur de vitesse de rotation obtenue pour une période antérieure.
• le signal alternatif de détection de vitesse de rotation est transformé en signal créneau par un «trigger de Schmidt».
• pendant une phase d'initialisation de mesure de régime, un modèle théorique du régime moteur est utilisé pour évaluer la durée de maintien de commutation.

Selon un deuxième aspect, l'invention concerne une unité de détection de vitesse de rotation d'un arbre de moteur d'aéronef, comprenant :
- une roue phonique configurée pour être entraînée en rotation par un arbre de moteur, et présentant une pluralité de dents espacées régulièrement,
- un capteur à reluctance variable placé au voisinage de la roue phonique, de sorte à ce que le passage des dents de la roue phonique génère un signal alternatif de détection de vitesse de rotation, une fréquence dudit signal alternatif étant proportionnelle à une vitesse de rotation de l'arbre,
- un circuit électronique configuré pour réaliser un crénelage du signal alternatif en signal créneau brut,
- une unité de traitement apte à mettre en œuvre un procédé conforme à ce qui précède, pour fournir en sortie un signal créneau traité.

Avantageusement, mais non limitativement, la roue phonique de l'unité de détection dispose d'une dent singulière, dont une forme et/ou une dimension diffère de celles des autres dents de la roue phonique, permettant d'identifier des points angulaires d'équilibrage.

Selon un troisième aspect, l'invention vise un moteur d'aéronef comprenant un arbre tournant dont on souhaite mesurer une vitesse de rotation, comme un arbre de corps basse pression dont on souhaite obtenir le régime N1, auquel est associée une unité de détection conforme à ce qui précède, comprenant une roue phonique vissée autour de l'arbre tournant, coaxiale à l'arbre tournant.

### PRESENTATION GENERALE DES FIGURES

La **figure 1** a déjà été décrite ci-avant, en introduction.

Des caractéristiques, buts et avantages de l'invention ressortiront de la description qui suit, qui est purement illustrative et non limitative, accompagnée des figures supplémentaires suivantes :
La **figure 2** illustre, sur un exemple de signal bruité en sortie de capteur à roue phonique, des détections erronées de période de signal créneau.
La **figure 3** représente schématiquement les étapes de détermination d'une valeur de durée de maintien de commutation.
La **figure 4** illustre un procédé de traitement appliqué à un signal de tension théorique, pour obtenir un signal créneau traité avec maintien régulier de commutation.
La **figure 5** illustre les résultats obtenus, selon un procédé de traitement d'un mode de réalisation, sur un signal de vitesse de rotation d'arbre, et notamment le signal créneau traité obtenu et les périodes successives mesurées.
La **figure 6** est un schéma bloc de fonctions électroniques mettant en œuvre, selon un mode de réalisation, le procédé de traitement illustré en figure 4, en aval de la mesure du signal de vitesse de rotation.
La **figure 7** représente de manière schématique un moteur d'aéronef comprenant un arbre tournant et une unité de détection de vitesse de rotation.

### DESCRIPTION DETAILLEE

Dans toute la suite, sera décrit un procédé de traitement d'un signal de mesure de vitesse de rotation mesuré aux bornes d'un capteur à roue phonique utilisé pour mesurer le régime N1 d'un moteur. Toutefois, les mêmes modalités de traitement peuvent tout aussi avantageusement être utilisées pour la mesure de tout autre régime d'élément tournant du moteur.

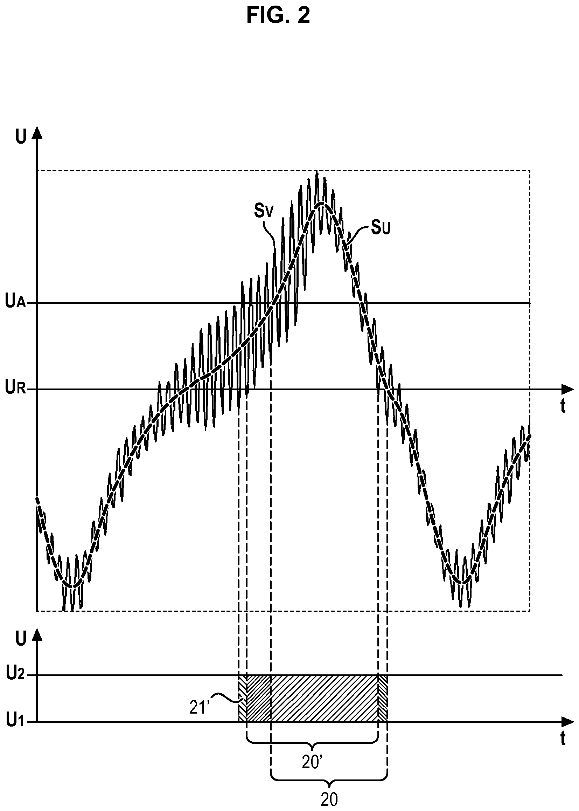

Un signal Sv alternatif de détection de vitesse de rotation de l'arbre du corps basse pression (BP) d'un turboréacteur double corps est traité en entrée de calculateur moteur (par exemple FADEC3) pour obtenir un signal créneau brut S_{CI}, sur lequel une mesure de fréquence, permettant de remonter à une valeur de régime N1, peut être réalisée. Par exemple, le signal Sv peut être filtré par un filtre RC, puis écrêté, puis à nouveau filtré, et enfin crénelé par un «trigger de Schmidt» de seuil de redémarrage U_{R} à 0 V et de seuil de réarmement U_{A} à 0.232 V. Un premier compteur dénombre les fronts descendants d'un signal créneau d'échantillonnage de fréquence élevée par rapport à celle attendue pour le signal créneau S_{C} (par exemple 547 kHz), et un deuxième compteur dénombre les fronts descendants du signal créneau S_{CI}, afin de déterminer la période temporelle du signal créneau S_{CI}. Or, comme vu ci-avant, le signal créneau brut S_{CI} peut présenter des commutations qui ne correspondent pas à des fronts montants ou descendants pour la partie utile du signal de détection de régime, mais qui sont au contraire provoquées par une variation de tension d'un bruit alternatif parasite (partie non utile du signal). Ce phénomène est illustré en **figure 2****.** Sur un premier axe, une tension théorique Sv aux bornes d'un capteur à roue phonique est représentée en fonction du temps t. On a aussi représenté sur le même axe la partie utile Su du signal, obtenue de manière théorique en soustrayant au signal Sv la contribution du bruit alternatif parasite. Sur un deuxième axe temporel, on a superposé un signal créneau (brut) associé au signal Sv, et un signal créneau (brut) associé au signal utile théorique Su, commutant entre un niveau bas U₁ et un niveau haut U₂. Il y a commutation de ces signaux créneaux vers le niveau haut U₂ lorsque la tension du signal non crénelé Sv passe au-delà du seuil U_{A}, et commutation de ces signaux créneaux vers le niveau bas U₁ lorsque la tension du signal non crénelé passe en-deçà du seuil U_{R}.

On observe, sur le deuxième axe, qu'en l'absence de traitement, le signal bruité Sv donne après crénelage un front montant et un front descendant correspondant à la partie 21', puis un front montant et un front descendant correspondant à la partie 20', tandis que le signal utile Su donne après crénelage un seul front montant et un seul front descendant correspondant à la partie 20. En outre, les fronts montant et descendant de la partie 20' ne sont pas en correspondance avec les fronts montant et descendant de la partie 20. Ainsi, la détection de période (par exemple la période entre deux fronts descendants successifs de signal créneau) est erronée pour le signal bruité Sv, par rapport à la période obtenue pour le signal utile Su, cette dernière étant la mesure d'intérêt puisque représentative du régime N1. Au vu de ces problèmes liés à la présence d'un bruit alternatif parasite, qui, comme exposé en introduction, sont d'autant plus gênants que le rapport de l'amplitude pic à pic du bruit parasite alternatif sur l'amplitude pic à pic du signal utile est élevé, on met en œuvre un procédé de traitement du signal alternatif Sv de détection de régime, obtenu aux bornes du capteur à roue phonique.

Le traitement de signal de la description qui va suivre est mis en œuvre au sein du calculateur moteur (par exemple FADEC3).

Un algorithme est mis en œuvre au sein du calculateur, prenant en entrée le signal créneau brut S_{CI} obtenu en sortie de «trigger de Schmidt», de seuil de redémarrage U_{R} et de seuil de réarmement U_{A}. L'algorithme est, dans ce qui suit, mis en œuvre dans une carte de traitement numérique, à l'aide d'instructions de code. En alternative, un procédé similaire à l'algorithme décrit ci-après pourrait être implémenté en électronique analogique.

L'algorithme délivre un signal créneau traité Sc, plus pertinent au regard du signal utile Su théorique vu précédemment car il comporte peu, voire pas de commutations parasites dues à un bruit franchissant les seuils U_{A} et U_{R} du «trigger de Schmidt». La mesure de fréquence réalisée sur le signal créneau traité S_{C} a donc plus de sens pour la mesure du régime N1 qu'une mesure réalisée sur le signal créneau brut S_{CI}.

Le principe du procédé de traitement est comme suit. On suppose que le comptage de la période des signaux créneaux est lancé à chaque front descendant. On se place à la fin d'une période Pₙ₋₁ (à un front descendant). On calcule, à l'aide d'une loi de gradient maximal possible de régime N1 prédéterminée, la variation maximale de régime possible, et on en déduit la valeur minimale du quart de la période Pₙ suivante. La valeur de durée de maintien de commutation T_{Hn} le long de la période Pₙ est prise égale à cette valeur minimale de quart de période obtenue, et ce durant toute la période Pₙ.

La loi utilisée pour le gradient maximal de régime N1 est exprimée, par exemple, en fonction de paramètres thermodynamiques du moteur, ou de paramètres caractéristiques du régime moteur. Cette loi est déterminée à l'avance, par exemple de manière empirique en effectuant des essais de manœuvres extrêmes (donnant lieu à des gradients de régime élevés). Cette loi peut être matérialisée par des abaques donnant le gradient maximal sur une pluralité de points de fonctionnement du moteur.

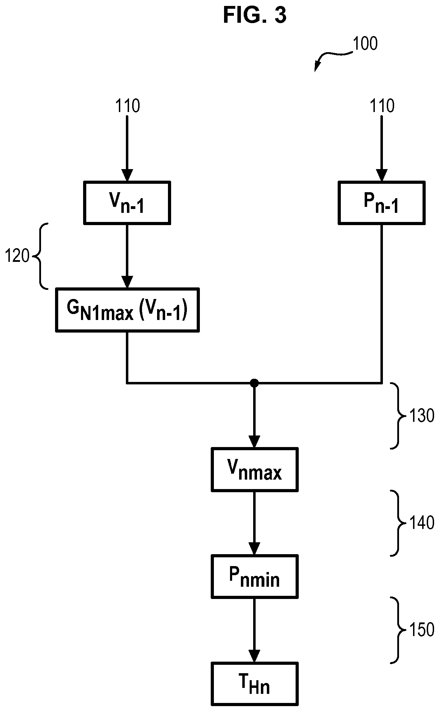

Le détail de l'algorithme 100 de calcul de la durée de maintien de commutation T_{Hn}, à utiliser durant la période Pₙ du signal créneau Sc, est représenté en **figure 3****.**

A l'étape 110, on acquiert la valeur de la période précédente (exprimée par exemple en millisecondes) pour le signal Sc, et la valeur Vₙ₋₁ de vitesse de rotation de la roue phonique correspondant à cette période précédente (exprimée par exemple en rotations par minute, rpm).

A l'étape 120, à partir de cette valeur de vitesse Vₙ₋₁, et à partir d'une loi G_{N1max} prédéterminée de gradient maximal de régime N1 exprimé en fonction du régime, on obtient une valeur G_{N1max}(Vₙ₋₁) de gradient maximal de vitesse de rotation. Ce gradient peut être exprimé en rpm par seconde. A l'étape 130, on considère le quart de la période Pₙ₋₁, multiplié par le gradient G_{N1max}(Vₙ₋₁) pour obtenir la variation maximale de vitesse de rotation sur ce quart de période. Cette variation maximale est ajoutée à la valeur Vₙ₋₁ de vitesse de rotation pour la période Pₙ₋₁, pour obtenir la vitesse maximale Vₙₘₐₓ sur un quart de la période Pₙ.

A l'étape suivante 140, on obtient d'abord, à partir de cette valeur de vitesse maximale Vₙₘₐₓ, une fréquence fₙₘₐₓ de passage de dent de la roue phonique. Par exemple, si la vitesse est exprimée en rpm, on divise par 60 la valeur Vₙₘₐₓ (pour obtenir une valeur en rotations par seconde), puis on multiplie la valeur obtenue par le nombre de dents de la roue phonique, pour obtenir la fréquence fₙₘₐₓ de passage de dent de la roue phonique. Enfin, pour obtenir la période Pₙₘᵢₙ correspondante, on considère l'inverse de la valeur fₙₘₐₓ, en appliquant de manière connue une saturation pour éviter les divisions par 0.

A l'issue de l'étape 140, on dispose donc d'une période Pₙₘᵢₙ minimale, pour le signal créneau traité S_{C} à la suite de la période mesurée. Lors d'une étape 150, on obtient enfin, en divisant par 4 la valeur Pₙ₋₁, le temps de maintien de commutation T_{Hn}.

Cette durée de maintien de commutation T_{Hn} est prévue pour être utilisée comme suit.

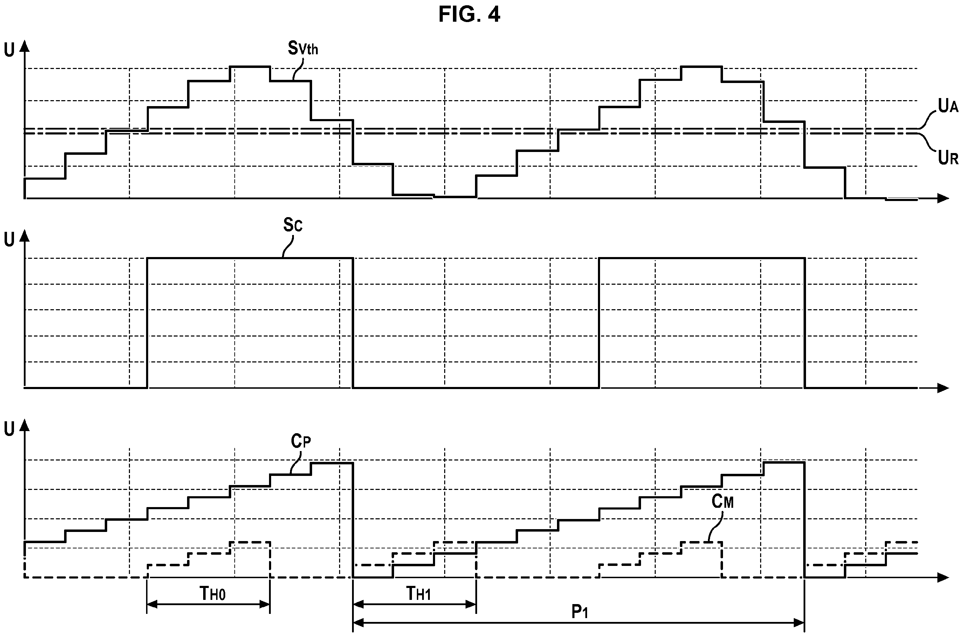

On considère ici la **figure 4****,** dans laquelle, sur un premier axe, un signal simplifié S_{Vth} de tension en escalier est représenté en fonction du temps, et est crénelé par un «trigger de Schmidt» de seuil de redémarrage U_{R} égal à 0, et de seuil de réarmement U_{A} strictement positif. Sur un deuxième axe est visible le signal créneau S_{C} obtenu, et sur un troisième axe, on a représenté en superposition un signal de comptage de période C_{P}, initialisé à chaque front descendant du signal créneau Sc, et un signal de comptage de maintien de commutation C_{M} exploitant la valeur T_{Hn} de durée de maintien de commutation obtenue par l'algorithme détaillé ci-avant. La temporisation du signal de maintien de commutation C_{M} est lancée après chaque commutation (en front montant ou en front descendant) du signal créneau Sc.

Ici, la période P₁ est lancée sur un front descendant du signal Sc. Le signal de comptage de maintien de commutation C_{M} est aussi lancé sur ce front descendant, et s'écoule sur une durée T_{H1} obtenue en fonction de la période P₀ qui précède, avec l'algorithme illustré par la figure 3, puis remis à 0 à l'issue de la durée T_{H1}. Sur l'abscisse du temps correspondant au front montant qui suit pour le signal Sc, le comptage du maintien de commutation est à nouveau lancé, le comptage de la période se poursuivant en même temps.

Le signal S_{C} est figé lorsque la valeur de C_{M} est strictement supérieure à 0, de sorte que le signal S_{C} ne peut pas commuter à nouveau pendant toute la durée T_{H1}, à la suite de la commutation qui lance le comptage de la période P₁.

En pratique, cela se traduit par le fait que les commutations observées sur le signal S_{C} sont espacées entre elles d'une durée supérieure au temps T_{Hn}. Cela revient à appliquer l'hypothèse selon laquelle, au regard de la loi de gradient G_{N1max} utilisée, une commutation observée sur le signal créneau brut S_{CI} avant la fin de la durée T_{Hn} de maintien de commutation ne peut correspondre qu'à un franchissement du seuil U_{A} ou du seuil U_{R} causé par un bruit alternatif parasite, surajouté au signal utile Su. Ainsi, on élimine un certain nombre de « commutations parasites » sur le signal créneau traité Sc.

En considérant que la période P₀ est la première période observée pour le signal S_{C} (phase d'initialisation de la mesure de régime), il n'est pas possible de calculer la valeur du temps de maintien de commutation T_{H0} à partir d'une valeur de période du signal S_{C} précédemment mesurée, puisqu'une telle valeur précédemment mesurée n'existe pas. Si l'on souhaite tout de même appliquer un traitement éliminant les « commutations parasites » sur la première période Po, il est possible d'appliquer une valeur de temps de maintien de commutation T_{H0} obtenue à partir d'un modèle théorique, par exemple en fonction des conditions opérationnelles et du dimensionnement du moteur, ou en appliquant une valeur T_{H0} qui correspond à d'autres mesures.

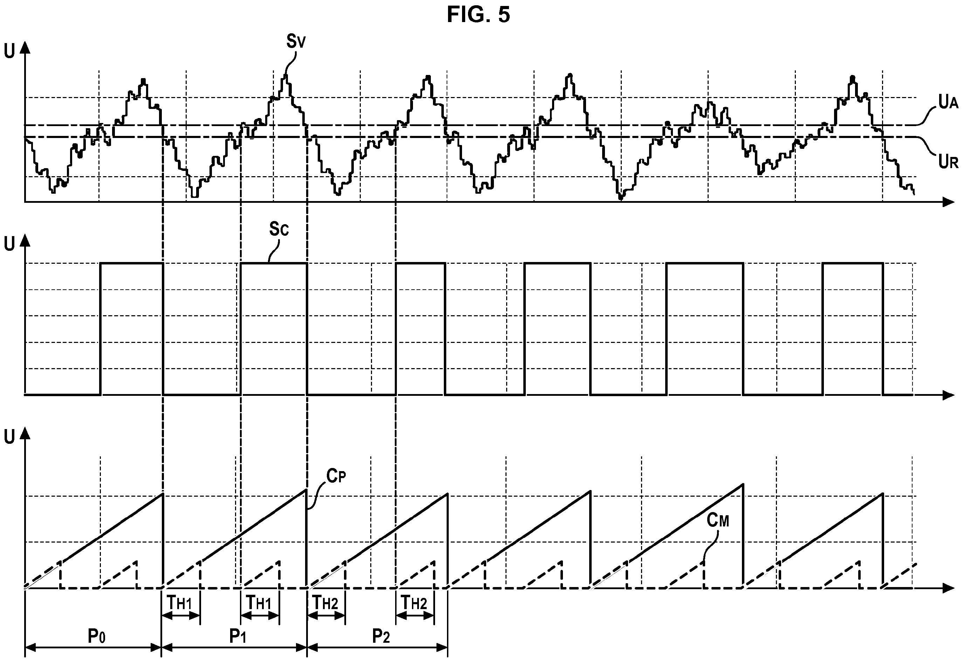

Le résultat observé sur un signal Sv réel de mesure de régime N1, signal de tension pris aux bornes d'un capteur à roue phonique, est visible en **figure 5****.** Les grandeurs physiques illustrées par les graphiques des trois axes sont les mêmes qu'en figure 4.

Notamment, pendant la première période Po, presque immédiatement après le front montant du signal créneau Sc, le signal Sv repasse en-deçà du seuil de redémarrage U_{R}, du fait du bruit. Cependant, le compteur de maintien de commutation C_{M} étant à une valeur strictement positive, cela ne se traduit pas par une commutation vers le niveau bas du signal créneau Sc. De même, une commutation parasite vers le niveau bas du signal créneau S_{C} est évitée, durant la seconde période T_{H1} de maintien de commutation de la période P₁ du signal Sc.

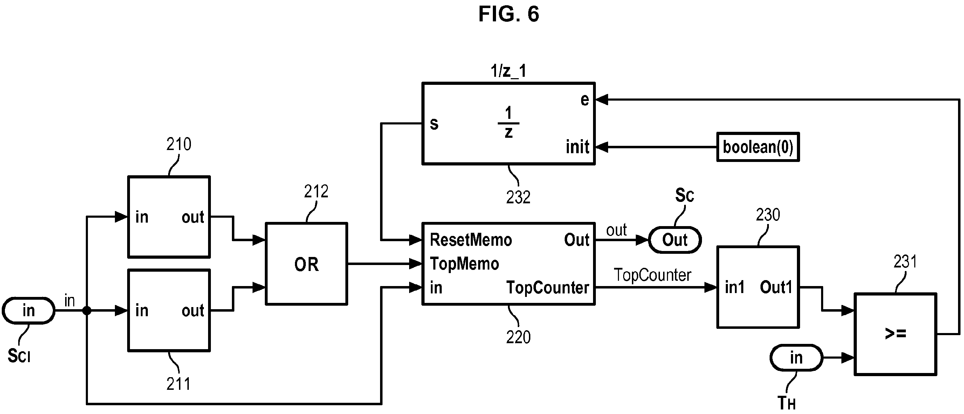

Un mode de réalisation pour une implémentation software du maintien de commutation, prenant en entrée le signal créneau brut S_{CI} en sortie de «trigger de Schmidt» et délivrant en sortie un signal créneau traité Sc, est illustré par le schéma bloc électronique de la **figure 6****.**

Le signal créneau brut S_{CI} est pris en entrée de deux unités 210 et 211. L'unité 210 délivre un booléen qui, à chaque front montant du signal S_{CI} (sans qu'il soit possible d'y distinguer les fronts montants dus au signal utile et les « fronts montants parasites »), prend la valeur 1, et vaut 0 le reste du temps. Autrement dit, la sortie du bloc 210 est un signal binaire qui identifie les instants où S_{CI} présente un front montant. L'unité 211 délivre de même un booléen qui identifie les signaux descendants. En 212, une porte logique OR délivre un signal nommé ici TopMemo, de valeur 1 aux instants où le signal S_{CI} commute, et de valeur 0 sinon.

L'unité 220 prend en entrée, d'une part le signal S_{CI}, et d'autre part le signal TopMemo. L'unité 220 prend également en entrée la valeur T_{H} de durée de maintien de commutation calculée en amont, pour la période Pₙ courante. Par ailleurs, l'unité 220 comporte une boucle de rétroaction : un signal ResetMemo est pris en entrée de 220, ce signal étant fonction d'un signal TopCounter délivré en sortie de 220, avec le fonctionnement suivant. Une valeur 1 à un instant t du signal TopMemo (donc une commutation de S_{CI}) provoque, si le compteur TopCounter n'est pas déjà lancé, le figeage, pour le signal créneau traité S_{C} délivré en sortie de 220, de la valeur de S_{CI} acquise à l'instant t, jusqu'à un instant t + T_{H}, ainsi que le lancement du compteur TopCounter. Ainsi, le signal S_{C} ne commute plus jusqu'à t + T_{H}. Après l'instant t + T_{H} (lorsque TopCounter est supérieur ou égal à T_{H}), le signal ResetMemo devient égal à 1, et le signal créneau S_{C} n'est plus figé à la valeur de S_{CI} à l'instant t. Par ailleurs, le compteur TopCounter est remis à zéro. Ainsi, d'une part le signal S_{C} peut à nouveau commuter, et d'autre part, si le signal S_{C} commute à nouveau, le compteur TopCounter peut être relancé.

Le signal ResetMemo vaut donc 1 immédiatement après le moment où la valeur du compteur TopCounter dépasse T_{H}, et 0 sinon. L'unité 230 permet de lancer un compteur TopCounter, et l'unité 231 réalise la comparaison entre la valeur du compteur TopCounter et la valeur T_{H}. Cette valeur est ensuite retardée par un opérateur de retard 232 pour délivrer un signal ResetMemo de rétroaction (ou de feedback). Une valeur 1 du signal ResetMemo cause la remise à zéro du compteur TopCounter si sa valeur est supérieure à T_{H}, permettant lors de la prochaine commutation de S_{CI} un nouveau démarrage du compteur TopCounter.

En revanche, si à l'instant t il se produit une commutation de S_{CI} et de Sc, et si à un instant de l'intervalle ]t ;t+TH[ le signal TopMemo vaut à nouveau 1 (indiquant une nouvelle commutation de S_{CI}), ResetMemo reste égal à 0 et le compteur TopCounter n'est pas à nouveau lancé, puisqu'il a déjà été lancé sans que la durée de maintien de commutation T_{H} soit écoulée. Ladite nouvelle commutation n'est donc pas prise en compte dans le signal S_{C} traité délivré, ce qui réalise l'objectif du procédé de traitement, à savoir écarter des commutations dues au bruit parasite du signal créneau S_{C} sur lequel une mesure de fréquence de passage de dents de roue phonique peut être réalisée.

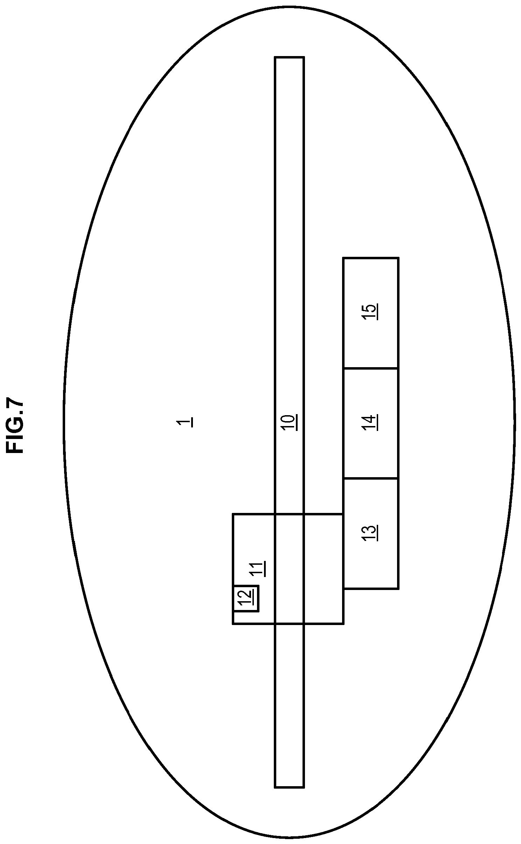

La **figure 7** représente de manière schématique une turbomachine 1 comprenant un arbre tournant 10 du corps basse pression dont on souhaite déterminer le régime de rotation N1. A cette fin, le moteur 1 comprend une unité de détection de la vitesse de rotation de l'arbre 10. L'unité de détection comprend une roue phonique 11, vissée autour de l'arbre 10 coaxialement à l'arbre 10. La roue phonique 11 est entraînée en rotation par l'arbre 10, et présente une pluralité de dents espacées régulièrement. De manière optionnelle, la roue 11 comporte une dent singulière 12 différente des autres dents. Un avantage de disposer d'une dent singulière 12 est de former des points angulaires utilisables pour la fonction d'équilibrage moteur. L'unité de détection comprend en outre un capteur 13 à reluctance variable, placé au voisinage de la roue 11, de sorte que le passage des dents de la roue 11 génère un signal alternatif de détection de vitesse de rotation. La fréquence du signal de détection ainsi généré est proportionnelle à la vitesse de rotation de l'arbre. La figure 7 représente en outre, associé au capteur 13 à reluctance variable, un circuit électronique 14 de l'unité de détection, comprenant une liaison avec le capteur 13 pour recevoir le signal de détection de vitesse de rotation, et réaliser le crénelage dudit signal pour donner un signal créneau brut. Comme vu précédemment, le signal créneau brut ainsi produit par le circuit 14 peut comporter des commutations parasites dues à un bruit. Pour éviter que lesdites commutations parasites n'aient un impact sur la mesure de vitesse de rotation de l'arbre 10, l'unité de détection comprend en outre une unité de traitement 15 comportant des moyens de calcul, par exemple un processeur. L'unité de traitement 15 est configurée pour mettre en œuvre le procédé représenté en figure 3, pour produire un signal créneau traité.

En alternative ou en combinaison, une unité de détection de vitesse de rotation peut être associée à un arbre tournant du moteur 1 autre qu'un arbre du corps basse pression.

Le procédé de traitement décrit ci-avant fournit, sur la base d'une loi de gradient maximal de régime moteur, une solution simple pour diminuer fortement et en temps réel l'influence de bruits parasites (notamment des bruits de type alternatif, venant se superposer de façon imprévisible au signal utile) sur la mesure du régime moteur. Cette solution ne nécessitant ni une diminution de l'amplitude pic à pic du signal utile, ni une augmentation de la différence de tension entre le seuil de redémarrage et le seuil de réarmement du «trigger de Schmidt» effectuant le crénelage, elle altère moins la précision et la sensibilité de mesure que des solutions connues de l'état de la technique.

## Revendications

1. Procédé de traitement d'un signal alternatif (Sv) de détection de vitesse de rotation d'un arbre d'un moteur d'aéronef, produit par un capteur à reluctance variable et affecté de bruits parasites de mesure, à partir d'un signal créneau brut (S_{CI}) commutant vers un niveau bas de tension (U₁), respectivement vers un niveau haut de tension (U₂), en correspondance avec le passage de la tension du signal alternatif (Sv) en-dessous d'un seuil de redémarrage (U_{R}), respectivement au-dessus d'un seuil de réarmement (U_{A}), le procédé comprenant les étapes suivantes :
- calcul d'un signal créneau traité (Sc), à partir du signal créneau brut (S_{CI}), et à l'aide d'une valeur de durée de maintien de commutation (TH) en-deçà de laquelle une partie non bruitée du signal alternatif (Sv) ne donne pas lieu à une commutation,
la durée de maintien de commutation (TH) étant calculée en fonction d'une valeur de vitesse de rotation de l'arbre obtenue pour la période précédente (Pₙ₋₁) du signal créneau traité (Sc), à l'aide d'une loi prédéterminée de gradient maximal exprimant un gradient maximal (G_{N1max}) de vitesse de rotation de l'arbre en fonction de la valeur de vitesse de rotation de l'arbre pour la période précédente (Pₙ₋₁),
- mesure de la vitesse de rotation de l'arbre, par mesure de fréquence du signal créneau traité (Sc),
chaque commutation vers le niveau bas (U₁) ou vers le niveau haut (U₂) du signal créneau traité (Sc) déclenchant le figeage du signal créneau traité (Sc) pendant une durée exactement égale à la durée de maintien de commutation (TH) précédemment calculée, de sorte que les commutations du signal créneau brut (S_{CI}) ne se traduisent pas par des commutations du signal créneau traité (Sc) pendant ledit figeage,
le signal créneau traité (Sc) n'étant plus figé une fois la durée de maintien de commutation (TH) écoulée.

2. Procédé selon la revendication 1, dans lequel la valeur de durée de maintien de commutation (TH) correspond au quart d'une période minimale de rotation de l'arbre à l'instant de mesure.

3. Procédé selon l'une quelconque des revendications 1 ou 2, dans lequel le signal alternatif (Sv) de détection de vitesse de rotation est transformé en signal créneau par un « trigger de Schmidt ».

4. Procédé selon l'une quelconque des revendications 1 à 3, dans lequel, pendant une phase d'initialisation de mesure de régime, un modèle théorique du régime moteur est utilisé pour évaluer la durée de maintien de commutation (T_{H}).

5. Procédé selon la revendication 4, dans lequel une durée de maintien de commutation initiale (T_{H0}) est obtenue à l'aide du modèle théorique du régime moteur, en fonction de conditions opérationnelles et d'un dimensionnement du moteur d'aéronef, et est utilisée pour calculer le signal créneau traité (Sc) lors de la phase d'initialisation de la mesure de régime.

6. Unité de détection de vitesse de rotation d'un arbre de moteur d'aéronef, comprenant :
- une roue phonique entraînée en rotation par ledit arbre, et présentant une pluralité de dents espacées régulièrement,
- un capteur à reluctance variable placé au voisinage de la roue phonique, de sorte que le passage des dents de la roue phonique génère un signal alternatif de détection de vitesse de rotation, une fréquence dudit signal alternatif étant proportionnelle à la vitesse de rotation de l'arbre,
- un circuit électronique réalisant le crénelage du signal alternatif (Sv) en signal créneau brut (S_{CI}),
- une unité de traitement apte à mettre en œuvre un procédé selon l'une des revendications 1 à 5, pour fournir en sortie un signal créneau traité (Sc).

7. Unité de détection selon la revendication 6, dans laquelle la roue phonique comprend une dent singulière, et comprend en outre une pluralité d'autres dents, une forme et/ou une dimension de la dent singulière différant de celles des autres dents, permettant d'identifier des points angulaires d'équilibrage.

8. Moteur d'aéronef comprenant :
- un arbre tournant,
- une unité de détection selon l'une des revendications 6 ou 7, comprenant une roue phonique vissée autour de l'arbre, coaxialement à l'arbre.

## Patentansprüche

1. Verfahren zur Verarbeitung eines Drehzahldetektions-Wechselsignals (S_{V}) einer Welle eines Luftfahrzeugmotors, das durch einen Sensor mit variabler Reluktanz erzeugt wird und von Messstörrauschen beeinträchtigt wird, ausgehend von einem Rohrechtecksignal (S_{CI}), das entsprechend dem Übergang der Spannung des Wechselsignals (S_{V}) unter eine Neustartsschwelle (U_{R}) beziehungsweise über eine Wiederaufrüstungsschwelle (U_{A}) hin zu einem niedrigen Spannungspegel (U₁) beziehungsweise hin zu einem hohen Spannungspegel (U₂) schaltet, wobei das Verfahren die folgenden Schritte umfasst:
- Berechnen eines verarbeiteten Rechtecksignals (S_{C}) ausgehend von dem Rohrechtecksignal (S_{CI}) und mittels eines Schaltaufrechterhaltungsdauerwerts (T_{H}) unterhalb dessen ein Teil ohne Rauschen des Wechselsignals (S_{V}) kein Schalten verursacht,
wobei die Schaltaufrechterhaltungsdauer (T_{H}) in Abhängigkeit von einem Drehzahlwert der Welle, der für die vorhergehende Periode (Pₙ₋₁) des verarbeiteten Rechtecksignals (S_{C}) erhalten wird, mittels eines vorbestimmten Gesetzes des maximalen Gradienten berechnet wird, das einen maximalen Drehzahlgradienten (G_{N1max}) der Welle in Abhängigkeit von dem Wert der Drehzahl der Welle für die vorhergehende Periode (Pₙ₋₁) ausdrückt,
- Messung der Drehzahl der Welle durch Frequenzmessung des verarbeiteten Rechtecksignals (S_{C}),
wobei jede Schaltung hin zum niedrigen Pegel (U₁) oder hin zum hohen Pegel (U₂) des verarbeiteten Rechtecksignals (S_{C}) das Feststehen des verarbeiteten Rechtecksignals (S_{C}) während einer Dauer auslöst, die genau gleich der vorhergehend berechneten Schaltaufrechterhaltungsdauer (T_{H}) ist, derart dass die Schaltungen des Rohrechtecksignals (S_{CI}) während des Feststehens keine Schaltungen des verarbeiteten Rechtecksignals (S_{C}) umsetzen,
wobei das verarbeitete Rechtecksignal (S_{C}) nicht mehr feststeht, nachdem die Schaltaufrechterhaltungsdauer (T_{H}) verstrichen ist.

2. Verfahren nach Anspruch 1, wobei der Schaltaufrechterhaltungsdauerwert (T_{H}) einem Viertel einer Mindestdrehperiode der Welle am Zeitpunkt der Messung entspricht.

3. Verfahren nach einem beliebigen der Ansprüche 1 oder 2, wobei das Drehzahldetektionswechselsignal (S_{V}) durch einen "Schmitt-Trigger" in ein Rechtecksignal umgewandelt wird.

4. Verfahren nach einem beliebigen der Ansprüche 1 bis 3, wobei während einer Drehzahlmessungsinitialisierungsphase ein theoretisches Modell der Motordrehzahl zum Bewerten der Schaltaufrechterhaltungsdauer (T_{H}) verwendet wird.

5. Verfahren nach Anspruch 4, wobei die anfängliche Schaltaufrechterhaltungsdauer (T_{H0}) mittels des theoretischen Modells der Motordrehzahl in Abhängigkeit von Betriebsbedingungen und einer Bemessung des Luftfahrzeugmotors erhalten wird und zum Berechnen des verarbeiteten Rechtecksignals (S_{C}) während der Initialisierungsphase der Drehzahlmessung verwendet wird.

6. Einheit zur Detektion der Drehzahl einer Luftfahrzeugmotorwelle, die umfasst:
- ein phonisches Rad, das durch die Welle drehbar angetrieben wird und eine Vielzahl von gleichmäßig beabstandeten Zähnen aufweist,
- einen Sensor mit variabler Reluktanz, der in der Nachbarschaft des phonischen Rades platziert ist, derart dass das Passieren der Zähne des phonischen Rades ein Drehzahldetektionswechselsignal erzeugt, wobei eine Frequenz des Wechselsignals proportional zur Drehzahl der Welle ist,
- eine elektronische Schaltung, die die Rechteckumwandlung des Wechselsignals (S_{V}) in ein Rohrechtecksignal (S_{CI}) ausführt,
- eine Verarbeitungseinheit, die geeignet ist, ein Verfahren nach einem der Ansprüche 1 bis 5 durchzuführen, um am Ausgang ein verarbeitetes Rechtecksignal (S_{C}) zu liefern.

7. Detektionseinheit nach Anspruch 6, wobei das phonische Rad einen singulären Zahn umfasst und ferner eine Vielzahl von anderen Zähne umfasst, wobei eine Form und/oder eine Abmessung des singulären Zahnes sich von denjenigen der anderen Zähne unterscheidet, wodurch die Feststellung der Ausgleichswinkelpunkte ermöglicht wird.

8. Luftfahrzeugmotor, der umfasst:
- eine Drehwelle,
- eine Detektionseinheit nach einem der Ansprüche 6 oder 7, die ein phonisches Rad umfasst, das um die Welle herum koaxial zu der Welle geschraubt ist.

## Claims

1. A processing method of an alternating signal (Sv) for detecting the rotation speed of a shaft of an aircraft engine, produced by a variable reluctance sensor and affected by parasitic measurement noise, from a raw window signal (S_{CI}) switching toward a low voltage level (U₁), respectively toward a high voltage level (U₂), in correspondence with the passage of the voltage of the alternating signal (Sv) below a restart threshold (U_{R}), respectively above a reset threshold (Uv), the method comprising the following steps:
- calculation of a processed window signal (Sc), based on the raw window signal (S_{CI}), and using a value of the switching continuation duration (TH) below which a non-noisy portion of the alternating signal (Sv) will not cause a switching,
the switching continuation duration (TH) being calculated as a function of a rotation speed value of the shaft obtained for the previous period (Pₙ₋₁) by means of a predetermined maximum gradient law expressing a maximal gradient (G_{N1max}) of rotation speed of the shaft for the previous period (Pₙ₋₁),
- measurement of the rotation speed of the shaft, by measurement of the frequency of the processed window signal (Sc),
wherein each switching toward the low level (U₁) or toward the high level (U₂) of the processed window signal (Sc) triggers the locking of the processed window signal (Sc) for a duration exactly equal to the switching continuation duration (TH) previously calculated, so that the switchings of the un-processed window signal (S_{CI}) are not translated into switchings of the processed window signal (Sc) during said locking,
the processed window signal (Sc) no longer being locked once the switching continuation duration (TH) has expired.

2. The method according to claim 1, wherein the value of the switching continuation duration (TH) corresponds to a quarter of a minimum rotation period of the shaft at the time of measurement.

3. The method according to any one of claims 1 or 2, wherein the alternating rotation speed detection signal (Sv) is transformed into a window signal by a "Schmidt trigger".

4. The method according to any one of claims 1 to 3, wherein, during an operating speed measurement initialization phase, a theoretical model of the engine operating speed is used to evaluate the switching continuation duration (T_{H}).

5. The method according to claim 4, wherein an initial value of the switching continuation duration (T_{H0}) is obtained from a theoretical model of the engine operating speed, as a function of operational conditions and of a dimensioning of the engine, and is used to calculate the processed window signal (Sc) during the operating speed measurement initialization phase.

6. A rotation speed detection unit of an aircraft engine shaft, comprising:
- a phonic wheel driven in rotation by the shaft, and having a plurality of regularly spaced teeth,
- a variable reluctance sensor placed in the vicinity of the phonic wheel, so that the passage of the teeth of the phonic wheel generates an alternating signal for detecting the rotation speed, a frequency of said alternating signal being proportional to the rotation speed of the shaft,
- an electronic circuit configured to carry out the windowing of the alternating signal (Sv) into a raw window signal (S_{CI}),
- a processing unit capable of implementing a method according to one of claims 1 to 5, to supply a processed window signal (Sc) as an output.

7. The detection unit according to claim 6, wherein the phonic wheel comprises a singular tooth, and further comprises a plurality of other teeth, wherein a shape and/or a dimension of the singular tooth differs from those of the other teeth, allowing angular balancing points to be identified.

8. An aircraft engine comprising:
- a rotating shaft,
- a detection unit according to one of claims 6 or 7, comprising a phonic wheel screwed around the shaft, coaxially with the shaft.
